# EUROPEAN PATENT SPECIFICATION

(11) **EP 4 170 388 B1**
(45) Date of publication and mention of the grant of the patent: **03.07.2024**
(21) Application number: 22202814.4
(22) Date of filing: 20.10.2022
(51) Int. Cl.: G01S 17/89, G01S 7/48, G01S 17/50, G01C 21/00

(54) **METHOD AND SYSTEM FOR SPATIAL STATIC MAP CONSTRUCTION**
VERFAHREN UND SYSTEM ZUR KONSTRUKTION EINER RÄUMLICHEN STATISCHEN KARTE
PROCÉDÉ ET SYSTÈME DE CONSTRUCTION DE CARTE STATIQUE SPATIALE

(30) Priority: 22.10.2021 CN 202111232447
(43) Date of publication of application: 26.04.2023
(73) Proprietor: Coretronic Intelligent Robotics Corporation, Hsin-Chu 300 (TW)
(72) Inventor: CHEN, YEN-YI, Hsin-Chu (TW); HSIAO, PEI-CHI, Hsin-Chu (TW); CHEN, CHIH-CHIEN, Hsin-Chu (TW); CHIANG, HUANG-CHENG, Hsin-Chu (TW)
(74) Representative: Ter Meer Steinmeister & Partner

(56) References cited:
- US-A1- 2021 327 128
- LEE HOJOON ET AL: "Moving Object Detection and Tracking Based on Interaction of Static Obstacle Map and Geometric Model-Free Approachfor Urban Autonomous Driving", IEEE TRANSACTIONS ON INTELLIGENT TRANSPORTATION SYSTEMS, IEEE, PISCATAWAY, NJ, USA, vol. 22, no. 6, 26 March 2020 (2020-03-26) , pages 3275-3284, XP011857830, ISSN: 1524-9050, DOI: 10.1109/TITS.2020.2981938 [retrieved on 2021-05-28]

## Description

### BACKGROUND

### Technology Field

The disclosure relates to a method and a system for space construction, and particularly, to a method and a system for spatial static map construction.

### Description of Related Art

In response to the advent of Industry 4.0, many factories have transformed the manufacturing mode into an automatic and intelligent one. Self-driving trucks or automatic stackers complete repetitive transportation tasks in specific fields without manual guidance, and this is one of the important themes in the fourth industrial revolution. Before self-driving vehicles operate in a specific field, sensors such as LiDAR sensors, inertial measurement unit (IMU) sensors, and cameras are required to build a large-scale spatial model of the environment, and establish a complete description of the environment map to facilitate the subsequent localization and navigation of a self-driving truck or an automatic stacker.

However, during the scanning period for building the environment map, if there are roaming people or dynamically moving objects, in turn, the built environment map may be a mess, affecting the accuracy of localization and navigation. In view of the reasons, developing a set of methods that can remove dynamic objects in the map is in demand.

Spatial static map construction is for example known from LEE HOJOON ET AL: "Moving Object Detection and Tracking Based on Interaction of Static Obstacle Map and Geometric Model-Free Approach for Urban Autonomous Driving", IEEE TRANSACTIONS ON INTELLIGENT TRANSPORTATION SYSTEMS, IEEE, PISCATAWAY, NJ, USA, vol. 22, no. 6, 26 March 2020 (2020-03-26), pages 3275-3284, XP011857830,ISSN: 1524-9050, DOI: 10.1109/TITS.2020.2981938.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be solved by one or more embodiments of the disclosure were acknowledged by people of ordinary skill in the pertinent art.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The objective of the disclosure is to provide a method and a system for spatial static map construction. Dynamic objects may be precisely removed from the static map, and a cleaner and accurate static map may be provided, which contributes to the localization and navigation of self-driving vehicles.

Other advantages can be further illustrated by the technical features broadly embodied and described as follows

The object is solved by the features of the independent claims. Preferred embodiments are given in the dependent claims.

In order to achieve one, part of, or all of the objectives or other objectives, the disclosure provides a method for spatial static map construction, which is applied to an electronic device with a processor. The method includes steps as follows. A three-dimensional space is scanned by a LiDAR sensor to generate a LiDAR frame including multiple points in the three-dimensional space in a time sequence. For each of the points in the LiDAR frame, a corresponding point closest to the point of the LiDAR frame is found from a static map built according to the three-dimensional space, and a distance between the point and the corresponding point is calculated. The point is labelled as a dynamic point if the distance is greater than a predetermined threshold, and the point is labelled as a static point if the distance is not greater than the predetermined threshold. Each of the dynamic points labelled in the LiDAR frame is compared with multiple points in N LiDAR frames generated before the time sequence. If it is determined that the N LiDAR frames include the dynamic point, the dynamic point is corrected as the static point. The dynamic point in the LiDAR frame is removed, and each of the static points in the LiDAR frame is updated to the static map.

In one or more embodiments, the method for spatial static map construction may further include performing posture conversion on the generated LiDAR frame so that a coordinate axis of the converted LiDAR frame is consistent with a coordinate axis of the static map.

In one or more embodiments, the step of performing the posture conversion on the LiDAR frame may include performing the posture conversion on the LiDAR frame through simultaneous localization and mapping (SLAM) technology.

In one or more embodiments, after the step of generating the LiDAR frame including the points in the three-dimensional space in the time sequence, the method for spatial static map construction may further include determining whether the LiDAR frame is a first LiDAR frame generated by the LiDAR sensor, directly updating the LiDAR frame to the static map if the LiDAR frame is the first LiDAR frame, and setting a coordinate axis of the static map based on a coordinate axis of the LiDAR frame.

In one or more embodiments, the method for spatial static map construction may further include repeating the steps, continuously using the LiDAR sensor to scan the three-dimensional space to generate LiDAR frames in different time sequences and to update the static map, and stopping the LiDAR sensor when the three-dimensional space is completely scanned.

The disclosure further provides a system for spatial static map construction, which includes a LiDAR sensor and a processing device. The processing device includes a processor and is connected to a LiDAR sensor. The processor is configured to perform the followings. A three-dimensional space is scanned by the LiDAR sensor to generate a LiDAR frame including multiple points in the three-dimensional space in a time sequence. For each of the points in the LiDAR frame, a corresponding point closest to the point of the LiDAR frame is found from a static map built according to the three-dimensional space, and a distance between the point and the corresponding point is calculated. The point is labelled as a dynamic point if the distance is greater than a predetermined threshold, and the point is labelled as a static point if the distance is not greater than the predetermined threshold. Each of the dynamic points labelled in the LiDAR frame is compared with multiple points in N LiDAR frames generated before the time sequence. If it is determined that the N LiDAR frames include the dynamic point, the dynamic point is corrected as the static point. Each of the dynamic points in the LiDAR frame is removed, and the static points in the LiDAR frame are updated to the static map.

In one or more embodiments, the processor may further perform posture conversion on the generated LiDAR frame so that a coordinate axis of the converted LiDAR frame is consistent with a coordinate axis of the static map.

In one or more embodiments, the processor may perform the posture conversion on the LiDAR frame through simultaneous localization and mapping (SLAM) technology.

In one or more embodiments, the processor may further determine whether the LiDAR frame in the time sequence is a first LiDAR frame generated by the LiDAR sensor, if the LiDAR frame is the first LiDAR frame, the LiDAR frame is directly updated to the static map, and a coordinate axis of the static map is set based on a coordinate axis of the LiDAR frame.

In one or more embodiments, the processor may further repeat the steps, continuously uses the LiDAR sensor to scan the three-dimensional space to generate LiDAR frames in different time sequences and to update the static map, and stops the LiDAR sensor when the three-dimensional space is completely scanned.

In one or more embodiments, the system for spatial static map construction may further include a self-propelled vehicle. The LiDAR sensor may be configured on the self-propelled vehicle to generate the LiDAR frame including the points in the three-dimensional space when the self-propelled vehicle is traveling in the three-dimensional space.

In one or more embodiments, the processor may further control the self-propelled vehicle to travel in the three-dimensional space, and during a traveling process of the self-propelled vehicle continuously uses the LiDAR sensor to scan the three-dimensional space to generate LiDAR frames in different time sequences and to update the static map until the self-propelled vehicle travels the entire three-dimensional space.

In one or more embodiments, the distance between the point of the LiDAR frame and the corresponding point of the static map may be Euclidean distance.

In summary, in the disclosure, the points of the dynamic objects may be reliably removed from the static map while retaining the complete structures of the static objects, and c a cleaner static map for localization and navigation of self-driving vehicles may be provided.

In order to make the features and advantages of the disclosure comprehensible, embodiments accompanied with drawings are described in detail below.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block view of a system for spatial static map construction of an embodiment of the disclosure.
FIG. 2 is a flowchart of a method for spatial static map construction according to an embodiment of the disclosure.
FIG. 3 is a block view of a system for spatial static map construction according to an embodiment of the disclosure.
FIG. 4 is a flowchart of a method for spatial static map construction according to an embodiment of the disclosure.
FIG. 5A and FIG. 5B are comparative examples of a method for spatial static map construction according to an embodiment of the disclosure.

### DESCRIPTION OF THE EMBODIMENTS

It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the disclosure can be positioned in a number of different orientations. As such, the directional terminology is used for purposes of illustration and is in no way limiting.

Simultaneous localization and mapping (SLAM) technology is adopted in the embodiment of the disclosure, 3D LiDAR sensors are used indoors or in a specific field to directly sense scanning points in space, or visual SLAMs (monocular cameras, binocular cameras, or RGBD depth cameras) are used to generate a sparse three-dimensional reconstruction map or a dense three-dimensional reconstruction map to construct the cognition of the environment. The map built by the methods may be a point cloud map, and each of the points in the point cloud map may represent an obstacle in the environment.

The embodiment of the disclosure provides an algorithm for spatial static map construction to create a static point cloud map (hereinafter referred to as a static map) for a three-dimensional space, such as a public environment with a large field area or a factory in operation. Moreover, for dynamic objects such as people, goods, and the like that appear during the scanning and mapping process, the point cloud belonging to the dynamic objects is automatically segmented and removed from the static map, and finally a clean and correct static map is output for an application to the localization and navigation of self-driving vehicles.

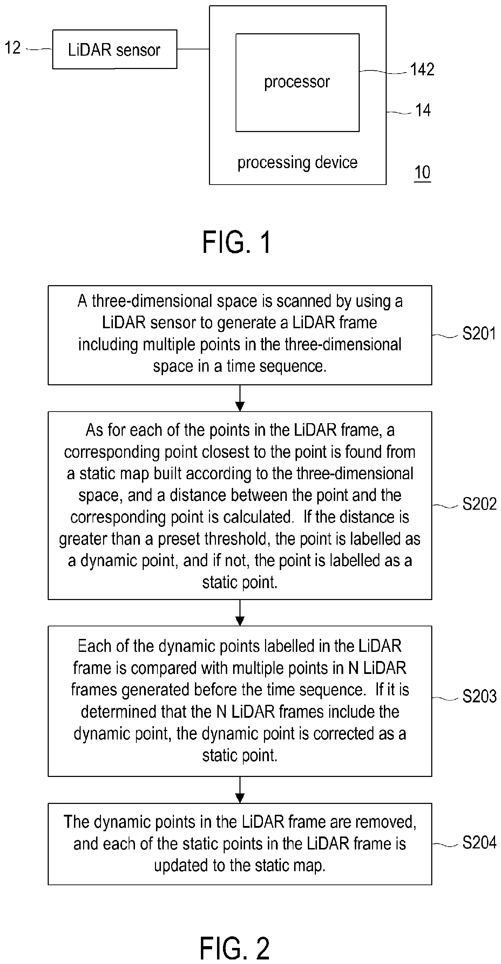

FIG. 1 is a block view of a system for spatial static map construction according to an embodiment of the disclosure. Referring to FIG. 1, a system 10 for spatial static map construction of the embodiment includes a LiDAR sensor 12 and a processing device 14. The LiDAR sensor 12 adopts optical remote sensing technology and uses light to measure the distance of the target. For example, the processing device 14 is a personal computer, a server, a workstation, or other electronic devices with computing functions, and the processing device 14 includes a processor 142, for example. In other embodiments, the processing device 14 may also include a connection device for being connected to an external device, a communication device for communicating with an external device, or a storage device for storing data, and the disclosure is not limited thereto.

The processor 142 is a central processing unit (CPU), a graphics processing unit (GPU), other programmable general-purpose or special-purpose microprocessors, a digital signal processor (DSP), a programmable controller, an application specific integrated circuits (ASIC), a programmable logic device (PLD), other similar devices, or a combination thereof, for example. The processor 142 is connected to the LiDAR sensor 12 to perform the method for spatial static map construction of the disclosure.

FIG. 2 is a flowchart of a method for spatial static map construction according to an embodiment of the disclosure. Referring to both FIG. 1 and FIG. 2, the method of the embodiment is applicable for the system 10 for spatial static map construction of FIG. 1. In the subsequent paragraphs, the steps of the method for spatial static map construction are illustrated in detail with reference to various elements of the system 10 for spatial static map construction of the disclosure.

In step S201, the processor 142 uses the LiDAR sensor 12 to scan a three-dimensional space to generate a LiDAR frame including multiple points in the three-dimensional space in a time sequence. For example, the three-dimensional space is a space such as a public environment or a space inside a factory, and the disclosure is not limited thereto.

In step S202, for each of the points in the LiDAR frame, the processor 142 finds a corresponding point closest to the point from a static map built according to the three-dimensional space and calculates the distance between the point in the LiDAR frame and the corresponding point of the static map. If the distance is greater than a predetermined threshold, the point in the LiDAR frame is labelled as a dynamic point, and if the distance is not greater than the predetermined threshold, the point in the LiDAR is labelled as a static point. The distance is the Euclidean distance, for example, but the disclosure is not limited thereto.

Specifically, not all points in the current LiDAR frame are required to be stitched into the static map. The input of the LiDAR frame follows a gradual scanning trajectory, so in the embodiment, for all points in the current LiDAR frame, a corresponding point closest to the point from the current static map is sequentially found, and the distance between the two points is calculated. If the distance is greater than the predetermined threshold, it means that the point is a point that has never appeared before, so the point is labelled as a dynamic point. If the distance is not greater than the predetermined threshold, the point is labelled as a static point.

The output signal corresponding to each LiDAR frame generated by the LiDAR sensor 12 in different time sequences is the distance measurement value of the surrounding obstacles based on its own coordinate axis. To stitch a new LiDAR frame onto the static map, in the embodiment, for example, simultaneous localization and mapping (SLAM) technology is used to perform posture conversion (e.g., including translation and rotation of six degrees of freedom) on the LiDAR frame, so that the coordinate axis of the LiDAR frame after posture conversion may be consistent with the coordinate axis of the static map. In some embodiments, the coordinate axis center of the static map is, for example, determined based on the first LiDAR frame generated when the LiDAR sensor 12 starts to scan, but the disclosure is not limited thereto.

In step S203, the processor 142 compares each of the dynamic points labelled in the LiDAR frame with multiple points in N LiDAR frames generated before the time sequence. If it is determined that the N LiDAR frames include the dynamic point, the dynamic point is corrected as a static point, where N is a positive integer.

Specifically, to prevent misjudgment caused by occlusion of objects, in the embodiment, for the point labelled as a dynamic point in the current LiDAR frame, a second judgement is made. For example, the points labelled as dynamic points in the current LiDAR frame are sequentially compared with the N LiDAR frames generated by the LiDAR sensor 12 in different previous N time sequences, and if the labelled dynamic point once appeared in the previous N LiDAR frames, this means that it is likely that the labelled dynamic point is a static point. Therefore, in the embodiment, the dynamic point is corrected as a static point.

In step S204, the processor 142 removes the dynamic points in the LiDAR frame and updates each of the static points in the LiDAR frame to the static map. That is, the processor 142 removes all the dynamic points labelled in the LiDAR frame and updates all the labelled static points in the LiDAR frame to the static map.

In the embodiment, by directly using the original LiDAR frame data, only the "distance" is used to distinguish static objects from dynamic objects, so the dynamic object in the static map may be reliably removed without training or identification of the object, so that the static map may provide more accurate localization and navigation information.

In some embodiments, the LiDAR sensor 12 in FIG. 1 may be configured on a self-propelled vehicle (not shown), and the processing device 14 in FIG. 1 may control the self-propelled vehicle to travel in a three-dimensional space while controlling the LiDAR sensor to scan the three-dimensional space to build a static map.

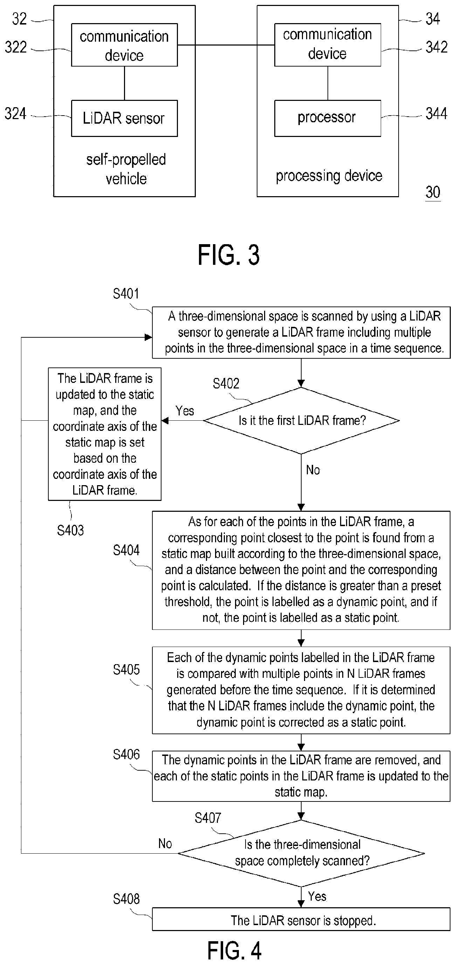

Specifically, FIG. 3 is a block view of a system for spatial static map construction according to an embodiment of the disclosure. Referring to FIG. 3, a system 30 for spatial static map construction 30 of the embodiment includes a self-propelled vehicle 32 and a processing device 34. The self-propelled vehicle 32 is configured with a LiDAR sensor 324 for scanning the three-dimensional space and measuring the distance of the target. For example, the processing device 34 is a personal computer, a server, a workstation, or other electronic devices with computing functions, and the processing device 34 includes a processor 344, for example. The types and functions of the LiDAR sensor 324 and the processor 344 are the same as or similar to those of the LiDAR sensor 12 and the processor 142 in the foregoing embodiment, so the detailed content is not repeated herein.

In the embodiment, the self-propelled vehicle 32 and the processing device 34 each are configured with a communication device 322 and a communication device 342 corresponding to each other for establishing a communication link and transmitting data in a wired or wireless manner. For the wired manner, the communication device 322 of the self-propelled vehicle 32 and the communication device 342 of the processing device 34 may be a universal serial bus (USB), a RS232, a universal asynchronous receiver/transmitter (UART), an internal integrated circuit (I2C), a serial peripheral interface (SPI), a display port, a thunderbolt, or a local area network (LAN) interface, but the disclosure is not limited thereto. For the wireless manner, the communication device 322 of the self-propelled vehicle 32 and the communication device 342 of the processing device 34 may support devices with communication protocols, such as wireless fidelity (Wi-Fi), RFID, Bluetooth, infrared, near-field communication (NFC), device-to-device (D2D), or the like, but the disclosure is not limited thereto. In other embodiments, the processing device 34 may be a device that is configured on the self-propelled vehicle 32 together with the LiDAR sensor 324 or a device with the processing device 34 configured at a remote end, but the disclosure is not limited thereto.

FIG. 4 is a flowchart of a method for spatial static map construction according to an embodiment of the disclosure. Referring to both FIG. 3 and FIG. 4, the method of the embodiment is applicable to the system 30 for spatial static map construction of FIG. 3. In the subsequent paragraphs, the steps of the method for spatial static map construction are illustrated in detail with reference to various elements of the system 30 for spatial static map construction of the disclosure.

In step S401, the LiDAR sensor 324 is used to scan the three-dimensional space to generate a LiDAR frame including multiple points in the three-dimensional space in a time sequence. The processor 344 of the processing device 34 establishes a communication link with the communication device 322 of the self-propelled vehicle 32 through the communication device 342, for example. The processor 344 controls the self-propelled vehicle 32 to travel in the three-dimensional space through the communication link and controls the LiDAR sensor 324 to scan the three-dimensional space while the self-propelled vehicle 32 is traveling.

In step S402, the processor 344 determines whether the LiDAR frame generated by the LiDAR sensor 324 is the first LiDAR frame. The LiDAR frame generated by the LiDAR sensor 324 is output to the processing device 34 through the communication link, and if the processor 344 of the processing device 34 determines that the LiDAR frame of the time sequence is the first LiDAR frame, then in step S403, the processor 344 directly updates the LiDAR frame to the static map and sets the coordinate axis of the static map based on the coordinate axis of the LiDAR frame.

Conversely, if the processor 344 of the processing device 34 determines that the LiDAR frame of the time sequence is not the first LiDAR frame, then in step S404, for each of the points in the LiDAR frame of the time sequence, the processor 344 of the processing device 34 finds a corresponding point closest to the point in the LiDAR frame of the time sequence from a static map built according to the three-dimensional space and calculates the distance between the point of the LiDAR frame and the corresponding point of the static map. If the calculated distance is greater than a predetermined threshold, the point of the LiDAR frame is labelled as a dynamic point; and if the calculated distance is not greater than the predetermined threshold, the point of the LiDAR is labelled as a static point.

In step S405, the processor 344 of the processing device 34 compares each of the dynamic points labelled in the LiDAR frame with multiple points in N LiDAR frames generated in different N time sequences before the time sequence, and if it is determined that the N LiDAR frames include the dynamic point, the dynamic point is corrected as a static point.

In step S406, the processor 344 removes the dynamic points in the LiDAR frame and updates each of the static points in the LiDAR frame to the static map. That is, the processor 344 removes all the labelled dynamic points and updates all the labelled static points to the static map.

The implementation of the steps S404 to S406 is the same as or similar to the implementation of the steps S202 to S204 of the foregoing embodiment, so the detailed content is not repeated herein.

In the embodiment, after the processor 344 updates the static map, in step S407, whether the three-dimensional space has been completely scanned is further checked. In some embodiments, the processor 344 determines whether the three-dimensional space has been completely scanned according to the path of the self-propelled vehicle 32 in the three-dimensional space, for example. For example, the processor 344 uses a positioning device disposed inside or outside the self-propelled vehicle 32 to position the self-propelled vehicle 32 to determine whether the self-propelled vehicle 32 has traveled through the three-dimensional space and the LiDAR sensor 324 has completed the scanning in three-dimensional space, but the disclosure is not limited thereto. The processor 344 may determine whether the three-dimensional space has been completely scanned in any manner.

If the processor 344 determines that the three-dimensional space has not been completely scanned, steps S401 to S406 are repeated. The self-propelled vehicle 32 is controlled to travel in a three-dimensional space, and during the traveling process of the self-propelled vehicle 32, the LiDAR sensor 322 is continuously used to scan the three-dimensional space to generate LiDAR frames in different time sequences and to update the static map until it is determined that the three-dimensional space has been completely scanned (or the self-propelled vehicle has traveled the entire three-dimensional space) in step S407. That is, when the processor 344 determines that the three-dimensional space has been completely scanned, step S408 is performed to stop the LiDAR sensor 322.

In the embodiment, by controlling the self-propelled vehicle to travel in the three-dimensional space, the LiDAR sensor is used to scan the three-dimensional space, and based on the method, the dynamic objects in the static map are removed. Therefore, the correct static map of the three-dimensional space may be quickly built on the premise of retaining the complete static objects (e.g., walls, shelves, doors and windows, partitions, and the like), and this contributes to the localization and navigation of self-driving vehicles.

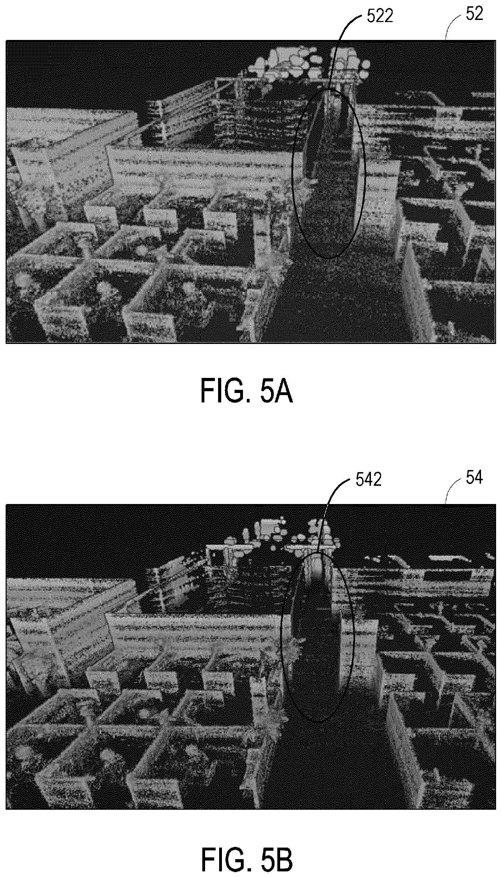

FIG. 5A and FIG. 5B are comparative examples of a method for spatial static map construction according to an embodiment of the disclosure. Referring to FIG. 5A first, a static point cloud map 52 is a map obtained by scanning an office space with many people moving around. The dynamic points have not been removed, so there are many moving tracks of people in a corridor 522, and these points may affect the localization and navigation of the self-driving vehicle. Referring to FIG. 5B, a static point cloud map 54 is a map generated by using the method for spatial static map construction of the embodiment of the disclosure. The dynamic points generated by the movement of people have been removed in the static point cloud map 54 (e.g.,, the dynamic points have been removed in a corridor 542), and the static points of the original static objects is retained in the static map, so it may be ensured that the static map built may retain the complete structure of the static object and provide more accurate localization and navigation information.

In summary, in the method and the system for spatial static map construction of the disclosure, all points in the current LiDAR frame are compared with the points in the current static map to determine whether there is a dynamic point and are further compared with the previous N LiDAR frames to correct the points that have appeared as static points. Accordingly, the points of dynamic objects can be reliably removed from the static map while retaining the complete structures of the static objects, and a cleaner static map may be provided for localization and navigation of self-driving vehicles.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art.

## Claims

1. A method for spatial static map construction, adapted for an electronic device with a processor, wherein the method comprises steps as follows:
scanning (S201) a three-dimensional space with a LiDAR sensor (12) to generate a LiDAR frame comprising a plurality of points in the three-dimensional space in a time sequence;
for each of the points in the LiDAR frame, finding (S202) a corresponding point closest to the point of the LiDAR frame from a static map built according to the three-dimensional space and calculating a distance between the point and the corresponding point, wherein the point is labelled as a dynamic point if the distance is greater than a predetermined threshold, and the point is labelled as a static point if the distance is not greater than the predetermined threshold;
comparing (S203) each of the dynamic points labelled in the LiDAR frame with a plurality of points in N LiDAR frames generated before the time sequence, wherein if it is determined that the N LiDAR frames comprise the dynamic point, the dynamic point is corrected as the static point, where N is a positive integer; and
removing (S204) the dynamic point in the LiDAR frame and updating each of the static points in the LiDAR frame to the static map.

2. The method for spatial static map construction according to claim 1, further comprising performing posture conversion on the generated LiDAR frame so that a coordinate axis of the converted LiDAR frame is consistent with a coordinate axis of the static map.

3. The method for spatial static map construction according to claim 2, wherein the step of performing the posture conversion on the LiDAR frame comprises performing the posture conversion on the LiDAR frame through simultaneous localization and mapping (SLAM) technology.

4. The method for spatial static map construction according to any one of the preceding claims, wherein after the step of generating the LiDAR frame comprising the points in the three-dimensional space in the time sequence, the method further comprises:
determining whether the LiDAR frame is a first LiDAR frame generated by the LiDAR sensor; and
directly updating the LiDAR frame to the static map if the LiDAR frame is the first LiDAR frame and setting a coordinate axis of the static map based on a coordinate axis of the LiDAR frame

5. The method for spatial static map construction according to any one of the preceding claims, further comprising repeating the steps, continuously using the LiDAR sensor to scan the three-dimensional space to generate LiDAR frames in different time sequences and to update the static map, and stopping the LiDAR sensor when the three-dimensional space is completely scanned

6. The method for spatial static map construction according to any one of the preceding claims, wherein the distance between the point of the LiDAR frame and the corresponding point of the static map is Euclidean distance.

7. A system for spatial static map construction, comprising a LiDAR sensor and a processing device,
wherein the processing device (14) comprises a processor (142) and is connected to the LiDAR sensor (12), and the processor (142) is configured to:
scan a three-dimensional space with the LiDAR sensor (12) to generate a LiDAR frame comprising a plurality of points in the three-dimensional space in a time sequence;
for each of the points in the LiDAR frame, find a corresponding point closest to the point of the LiDAR frame from a static map built according to the three-dimensional space and calculate a distance between the point and the corresponding point, wherein the point is labelled as a dynamic point if the distance is greater than a predetermined threshold, and the point is labelled as a static point if the distance is not greater than the predetermined threshold;
compare each of the dynamic points labelled in the LiDAR frame with a plurality of points in N LiDAR frames generated before the time sequence, wherein if it is determined that the N LiDAR frames comprise the dynamic point, the dynamic point is corrected as the static point, where N is a positive integer; and
remove each of the dynamic points in the LiDAR frame and update the static points in the LiDAR frame to the static map.

8. The system for spatial static map construction according to claim 7, wherein the processor (142) is further configured to perform posture conversion on the generated LiDAR frame so that a coordinate axis of the converted LiDAR frame is consistent with a coordinate axis of the static map.

9. The system for spatial static map construction according to claim 8, wherein the processor (142) is configured to perform the posture conversion on the LiDAR frame through simultaneous localization and mapping (SLAM) technology.

10. The system for spatial static map construction according to any one of the preceding claims 7-9, wherein the processor (142) is further configured to determine whether the LiDAR frame in the time sequence is a first LiDAR frame generated by the LiDAR sensor, if the LiDAR frame is the first LiDAR frame, the LiDAR frame is directly updated to the static map, and a coordinate axis of the static map is set based on a coordinate axis of the LiDAR frame.

11. The system for spatial static map construction according to any one of the preceding claims 7-10, wherein the processor (142) is further configured to repeat the steps, continuously uses the LiDAR sensor to scan the three-dimensional space to generate LiDAR frames in different time sequences and to update the static map, and stops the LiDAR sensor when the three-dimensional space is completely scanned.

12. The system for spatial static map construction according to any one of the preceding claims 7-11, wherein the distance between the point of the LiDAR frame and the corresponding point of the static map is Euclidean distance.

13. The system for spatial static map construction according to any one of the preceding claims 7-12, further comprising a self-propelled vehicle (32), wherein the LiDAR sensor (12) is configured on the self-propelled vehicle (32) to generate the LiDAR frame comprising the points in the three-dimensional space when the self-propelled vehicle is traveling in the three-dimensional space.

14. The system for spatial static map construction according to any one of the preceding claims 7-13, wherein the processor (142) is further configured to control the self-propelled vehicle (32) to travel in the three-dimensional space, and during a traveling process of the self-propelled vehicle (32), is configured to continuously use the LiDAR sensor (12) to scan the three-dimensional space to generate LiDAR frames in different time sequences and to update the static map until the self-propelled vehicle (32) travels the entire three-dimensional space.

## Patentansprüche

1. Verfahren zur Konstruktion statischer räumlicher Karten, das für eine elektronische Vorrichtung mit einem Prozessor ausgelegt ist, wobei das Verfahren die folgenden Schritte umfasst:
Abtasten (S201) eines dreidimensionalen Raums mit einem LIDAR-Sensor (12), um einen LIDAR-Rahmen, der mehrere Punkte im dreidimensionalen Raum umfasst, in einer Zeitfolge zu erzeugen;
Suchen (S202) für jeden der Punkte im LIDAR-Rahmen eines entsprechenden Punkts, der am nächsten bei dem Punkt des LiDAR-Rahmens liegt, aus einer statischen Karte, die gemäß dem dreidimensionalen Raum gebildet wurde, und Berechnen einer Entfernung zwischen dem Punkt und dem entsprechenden Punkt, wobei der Punkt als ein dynamischer Punkt bezeichnet wird, wenn die Entfernung größer als ein vorgegebener Schwellenwert ist, und der Punkt als ein statischer Punkt bezeichnet wird, wenn die Entfernung nicht größer als der vorgegebene Schwellenwert ist;
Vergleichen (S203) jedes der dynamischen Punkte, die im LIDAR-Rahmen bezeichnet sind, mit mehreren Punkten in N LiDAR-Rahmen, die vor der Zeitfolge erzeugt wurden, wobei dann, wenn bestimmt wird, dass die N LiDAR-Rahmen den dynamischen Punkt umfassen, der dynamische Punkt zum statischen Punkt korrigiert wird und N eine positive ganze Zahl ist; und
Entfernen (S204) des dynamischen Punkts aus dem LIDAR-Rahmen und Aktualisieren jedes der statischen Punkte im LIDAR-Rahmen zur statischen Karte.

2. Verfahren zur Konstruktion statischer räumlicher Karten nach Anspruch 1, das ferner ein Durchführen einer Lageumwandlung am erzeugten LIDAR-Rahmen umfasst, derart, dass eine Koordinatenachse des umgewandelten LIDAR-Rahmens mit einer Koordinatenachse der statischen Karte konsistent ist.

3. Verfahren zur Konstruktion statischer räumlicher Karten nach Anspruch 2, wobei der Schritt des Durchführens der Lageumwandlung am LiDAR-Rahmen ein Durchführen der Lageumwandlung am LiDAR-Rahmen durch eine Technologie zur gleichzeitigen Lokalisierung und Abbildung (SLAM-Technologie) umfasst.

4. Verfahren zur Konstruktion statischer räumlicher Karten nach einem der vorhergehenden Ansprüche, wobei das Verfahren nach dem Schritt des Erzeugens in der Zeitfolge des LiDAR-Rahmens, der die Punkte im dreidimensionalen Raum umfasst, ferner Folgendes umfasst:
Bestimmen, ob der LiDAR-Rahmen ein erster LIDAR-Rahmen, der durch den LiDAR-Sensor erzeugt wurde, ist; und
direktes Aktualisieren des LIDAR-Rahmens zur statischen Karte, falls der LIDAR-Rahmen der erste LIDAR-Rahmen ist, und Setzen einer Koordinatenachse der statischen Karte auf der Grundlage einer Koordinatenachse des LIDAR-Rahmens.

5. Verfahren zur Konstruktion statischer räumlicher Karten nach einem der vorhergehenden Ansprüche, das ferner ein Wiederholen der Schritte umfasst, wobei der LiDAR-Sensor kontinuierlich verwendet wird, um den dreidimensionalen Raum abzutasten, um LIDAR-Rahmen in verschiedenen Zeitfolgen zu erzeugen und die statische Karte zu aktualisieren, und der LiDAR-Sensor gestoppt wird, wenn der dreidimensionale Raum vollständig abgetastet worden ist.

6. Verfahren zur Konstruktion statischer räumlicher Karten nach einem der vorhergehenden Ansprüche, wobei die Entfernung zwischen dem Punkt des LIDAR-Rahmens und dem entsprechenden Punkt der statischen Karte der euklidische Abstand ist.

7. System zur Konstruktion statischer räumlicher Karten, das einen LiDAR-Sensor und eine Verarbeitungsvorrichtung umfasst,
wobei die Verarbeitungsvorrichtung (14) einen Prozessor (142) umfasst und mit dem LiDAR-Sensor (12) verbunden ist und der Prozessor (142) konfiguriert ist zum:
Abtasten eines dreidimensionalen Raums mit dem LiDAR-Sensor (12), um einen LiDAR-Rahmen, der mehrere Punkte im dreidimensionalen Raum umfasst, in einer Zeitfolge zu erzeugen;
Suchen für jeden der Punkte im LIDAR-Rahmen eines entsprechenden Punkts, der am nächsten bei dem Punkt des LIDAR-Rahmens liegt, aus einer statischen Karte, die gemäß dem dreidimensionalen Raum gebildet wurde, und Berechnen einer Entfernung zwischen dem Punkt und dem entsprechenden Punkt, wobei der Punkt als ein dynamischer Punkt bezeichnet wird, wenn die Entfernung größer als ein vorgegebener Schwellenwert ist, und der Punkt als ein statischer Punkt bezeichnet wird, wenn die Entfernung nicht größer als der vorgegebene Schwellenwert ist;
Vergleichen jedes der dynamischen Punkte, die im LIDAR-Rahmen bezeichnet sind, mit mehreren Punkten in N LiDAR-Rahmen, die vor der Zeitfolge erzeugt wurden, wobei dann, wenn bestimmt wird, dass die N LiDAR-Rahmen den dynamischen Punkt umfassen, der dynamische Punkt zum statischen Punkt korrigiert wird und N eine positive ganze Zahl ist; und
Entfernen jedes der dynamischen Punkte aus dem LIDAR-Rahmen und Aktualisieren der statischen Punkte im LiDAR-Rahmen zur statischen Karte.

8. System zur Konstruktion statischer räumlicher Karten nach Anspruch 7, wobei der Prozessor (142) ferner konfiguriert ist, eine Lageumwandlung am erzeugten LIDAR-Rahmen durchzuführen, derart, dass eine Koordinatenachse des umgewandelten LiDAR-Rahmens mit einer Koordinatenachse der statischen Karte konsistent ist.

9. System zur Konstruktion statischer räumlicher Karten nach Anspruch 8, wobei der Prozessor (142) konfiguriert ist, die Lageumwandlung am LIDAR-Rahmen durch eine Technologie zur gleichzeitigen Lokalisierung und Abbildung (SLAM-Technologie) durchzuführen.

10. System zur Konstruktion statischer räumlicher Karten nach einem der vorhergehenden Ansprüche 7-9, wobei der Prozessor (142) ferner konfiguriert ist, zu bestimmen, ob der LIDAR-Rahmen in der Zeitfolge ein erster LiDAR-Rahmen, der durch den LiDAR-Sensor erzeugt wurde, ist, wobei dann, wenn der LiDAR-Rahmen der erste LIDAR-Rahmen ist, der LiDAR-Rahmen zur statischen Karte direkt aktualisiert wird und eine Koordinatenachse der statischen Karte auf der Grundlage einer Koordinatenachse des LIDAR-Rahmens gesetzt wird.

11. System zur Konstruktion statischer räumlicher Karten nach einem der vorhergehenden Ansprüche 7-10, wobei der Prozessor (142) ferner konfiguriert ist, die Schritte zu wiederholen, den LiDAR-Sensor kontinuierlich verwendet, um den dreidimensionalen Raum abzutasten, um LIDAR-Rahmen in verschiedenen Zeitfolgen zu erzeugen und die statische Karte zu aktualisieren, und den LIDAR-Sensor stoppt, wenn der dreidimensionale Raum vollständig abgetastet worden ist.

12. System zur Konstruktion statischer räumlicher Karten nach einem der vorhergehenden Ansprüche 7-11, wobei die Entfernung zwischen dem Punkt des LIDAR-Rahmens und dem entsprechenden Punkt der statischen Karte der euklidische Abstand ist.

13. System zur Konstruktion statischer räumlicher Karten nach einem der vorhergehenden Ansprüche 7-12, das ferner ein selbstangetriebenes Fahrzeug (32) umfasst, wobei der LiDAR-Sensor (12) am selbstangetriebenen Fahrzeug (32) konfiguriert ist, den LIDAR-Rahmen zu erzeugen, der die Punkte im dreidimensionalen Raum umfasst, wenn das selbstangetriebene Fahrzeug sich im dreidimensionalen Raum bewegt.

14. System zur Konstruktion statischer räumlicher Karten nach einem der vorhergehenden Ansprüche 7-13, wobei der Prozessor (142) ferner konfiguriert ist, das selbstangetriebene Fahrzeug (32) zu steuern, sich im dreidimensionalen Raum zu bewegen, und konfiguriert ist, während eines Fahrprozesses des selbstangetriebenen Fahrzeugs (32) den LiDAR-Sensor (12) kontinuierlich zu verwenden, um den dreidimensionalen Raum abzutasten, um LIDAR-Rahmen in verschiedenen Zeitfolgen zu erzeugen, und die statische Karte zu aktualisieren, bis das selbstangetriebene Fahrzeug (32) sich im gesamten dreidimensionalen Raum bewegt hat.

## Revendications

1. Procédé de construction de carte statique spatiale, adapté pour un dispositif électronique ayant un processeur, dans lequel le procédé comporte les étapes suivantes :
balayer (S201) un espace tridimensionnel avec un capteur LiDAR (12) pour générer une image LiDAR comportant une pluralité de points dans l'espace tridimensionnel dans une séquence temporelle ;
pour chacun des points dans l'image LiDAR, trouver (S202) un point correspondant le plus près du point de l'image LiDAR à partir d'une carte statique construite en fonction de l'espace tridimensionnel et calculer une distance entre le point et le point correspondant, dans lequel le point est étiqueté comme un point dynamique si la distance est supérieure à un seuil prédéterminé, et le point est étiqueté comme un point statique si la distance n'est pas supérieure au seuil prédéterminé ;
comparer (S203) chacun des points dynamiques étiquetés dans l'image LiDAR avec une pluralité de points dans N images LiDAR générées avant la séquence temporelle, dans lequel s'il est déterminé que les N images LiDAR comportent le point dynamique, le point dynamique est corrigé comme étant le point statique, où N est un entier positif ; et
retirer (S204) le point dynamique dans l'image LiDAR et mettre à jour chacun des points statiques dans l'image LiDAR sur la carte statique.

2. Procédé de construction de carte statique spatiale selon la revendication 1, comportant en outre d'effectuer une conversion de posture sur l'image LiDAR générée de sorte qu'un axe de coordonnées de l'image LiDAR convertie est en accord avec un axe de coordonnées de la carte statique.

3. Procédé de construction de carte statique spatiale selon la revendication 2, dans lequel l'étape consistant à effectuer la conversion de posture sur l'image LiDAR comporte d'effectuer la conversion de posture sur l'image LiDAR par une technologie de localisation et de cartographie simultanées (SLAM).

4. Procédé de construction de carte statique spatiale selon l'une quelconque des revendications précédentes, dans lequel après l'étape de génération de l'image LiDAR comportant les points dans l'espace tridimensionnel dans la séquence temporelle, le procédé comporte en outre de :
déterminer si l'image LiDAR est une première image LiDAR générée par le capteur LiDAR ; et
mettre directement à jour l'image LiDAR sur la carte statique si l'image LiDAR est la première image LiDAR et définir un axe de coordonnées de la carte statique sur la base d'un axe de coordonnées de l'image LiDAR.

5. Procédé de construction de carte statique spatiale selon l'une quelconque des revendications précédentes, comportant de répéter les étapes, d'utiliser en continu le capteur LiDAR pour balayer l'espace tridimensionnel afin de générer des images LiDAR dans différentes séquences temporelles et de mettre à jour la carte statique, et d'arrêter le capteur LiDAR lorsque l'espace tridimensionnel est entièrement balayé.

6. Procédé de construction de carte statique spatiale selon l'une quelconque des revendications précédentes, dans lequel la distance entre le point de l'image LiDAR et le point correspondant de la carte statique est une distance euclidienne.

7. Système de construction de carte statique spatiale, comportant un capteur LiDAR et un dispositif de traitement,
dans lequel le dispositif de traitement (14) comporte un processeur (142) et est connecté au capteur LiDAR (12), et le processeur (142) est configuré pour :
balayer un espace tridimensionnel avec le capteur LiDAR (12) pour générer une image LiDAR comportant une pluralité de points dans l'espace tridimensionnel dans une séquence temporelle ;
pour chacun des points dans l'image LiDAR, trouver un point correspondant le plus près du point de l'image LiDAR à partir d'une carte statique construite en fonction de l'espace tridimensionnel et calculer une distance entre le point et le point correspondant, dans lequel le point est étiqueté comme un point dynamique si la distance est supérieure à un seuil prédéterminé, et le point est étiqueté comme un point statique si la distance n'est pas supérieure au seuil prédéterminé ;
comparer chacun des points dynamiques étiquetés dans l'image LiDAR avec une pluralité de points dans N images LiDAR générées avant la séquence temporelle, dans lequel s'il est déterminé que les N images LiDAR comportent le point dynamique, le point dynamique est corrigé comme étant le point statique, où N est un entier positif ; et
retirer chacun des points dynamiques dans l'image LiDAR et mettre à jour les points statiques dans l'image LiDAR sur la carte statique.

8. Système de construction de carte statique spatiale selon la revendication 7, dans lequel le processeur (142) est en outre configuré pour effectuer une conversion de posture sur l'image LiDAR générée de sorte qu'un axe de coordonnées de l'image LiDAR convertie est en accord avec un axe de coordonnées de la carte statique.

9. Système de construction de carte statique spatiale selon la revendication 8, dans lequel le processeur (142) est configuré pour effectuer la conversion de posture sur l'image LiDAR par une technologie de localisation et de cartographie simultanées (SLAM).

10. Système de construction de carte statique spatiale selon l'une quelconque des revendications 7 à 9 précédentes, dans lequel le processeur (142) est en outre configuré pour déterminer si l'image LiDAR dans la séquence temporelle est une première image LiDAR générée par le capteur LiDAR, si l'image LiDAR est la première image LiDAR, l'image LiDAR est directement mise à jour sur la carte statique, et un axe de coordonnées de la carte statique est défini sur la base d'un axe de coordonnées de l'image LiDAR.

11. Système de construction de carte statique spatiale selon l'une quelconque des revendications 7 à 10 précédentes, dans lequel le processeur (142) est en outre configuré pour répéter les étapes, utiliser en continu le capteur LiDAR pour balayer l'espace tridimensionnel afin de générer des images LiDAR dans différentes séquences temporelles et de mettre à jour la carte statique, et arrêter le capteur LiDAR lorsque l'espace tridimensionnel est entièrement balayé.

12. Système de construction de carte statique spatiale selon l'une quelconque des revendications 7 à 11 précédentes, dans lequel la distance entre le point de l'image LiDAR et le point correspondant de la carte statique est une distance euclidienne.

13. Système de construction de carte statique spatiale selon l'une quelconque des revendications 7 à 12 précédentes, comportant en outre un véhicule automoteur (32), dans lequel le capteur LiDAR (12) est configuré sur le véhicule automoteur (32) pour générer l'image LiDAR comportant les points dans l'espace tridimensionnel lorsque le véhicule automoteur se déplace dans l'espace tridimensionnel.

14. Système de construction de carte statique spatiale selon l'une quelconque des revendications 7 à 13 précédentes, dans lequel le processeur (142) est en outre configuré pour commander le véhicule automoteur (32) pour se déplacer dans l'espace tridimensionnel, et pendant un processus de déplacement du véhicule automoteur (32), est configuré pour utiliser en continu le capteur LiDAR (12) pour balayer l'espace tridimensionnel afin de générer des images LiDAR dans différentes séquences temporelles et de mettre à jour la carte statique jusqu'à ce que le véhicule automoteur (32) se déplace dans la totalité de l'espace tridimensionnel.
